(19) Europäisches Patentamt
European Patent Office
Office européen des brevets

(11) **EP 2 896 255 B1**

(12) **EUROPEAN PATENT SPECIFICATION**

(45) Date of publication and mention
of the grant of the patent:
**03.09.2025 Bulletin 2025/36**

(21) Application number: **13836762.8**

(22) Date of filing: **25.06.2013**

(51) International Patent Classification (IPC):
***G01S 5/02*** *(2010.01)*    ***G01S 13/76*** *(2006.01)*
***G01S 1/04*** *(2006.01)*

(52) Cooperative Patent Classification (CPC):
**G01S 1/0423; G01S 5/0236; G01S 13/765**

(86) International application number:
**PCT/US2013/047512**

(87) International publication number:
**WO 2014/042744 (20.03.2014 Gazette 2014/12)**

(54) **SUPPLEMENTAL LOCATION-RELATED INFORMATION TRANSMIT IN UNASSOCIATED WIRELESS STATES**

ÜBERTRAGUNG ZUSÄTZLICHER ORTSBEZOGENER INFORMATIONEN IN UNVERBUNDENEN WIRELESS-ZUSTÄNDEN

TRANSMISSION D'INFORMATIONS SUPPLÉMENTAIRES RELATIVES À UNE LOCALISATION DANS DES ÉTATS SANS FIL NON ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.09.2012  US 201213621446**

(43) Date of publication of application:
**22.07.2015  Bulletin 2015/30**

(73) Proprietor: **Intel Corporation**
**Santa Clara, CA 95054 (US)**

(72) Inventors:
 • **AMIZUR, Yuval**
  **44347 M Kfar-Saba (IL)**

 • **BANIN, Leor**
  **49378 M Petach Tikva (IL)**
 • **SCHATZBERG, Uri**
  **5560008 M Kiryat Onon (IL)**

(74) Representative: **HGF**
**HGF Limited**
**1 City Walk**
**Leeds LS11 9DX (GB)**

(56) References cited:
WO-A1-2012/035190      WO-A2-2007/120380
WO-A2-2007/121331      WO-A2-2009/010401
WO-A2-2012/077991      US-A1- 2004 203 872
US-A1- 2009 088 182      US-A1- 2010 150 117
US-A1- 2010 283 679      US-A1- 2010 283 679
US-B1- 6 490 456

**Description**

**TECHNICAL FIELD**

This disclosure relates generally to the field of wireless communications, and in particular, to wireless device location identification.

**BACKGROUND ART**

Given the advent of new applications and services directed to marketing opportunities and social networking, it has become increasingly important to accurately determine the location or position of wireless devices.

Various attempts have been made to develop indoor navigation systems that provide a digital electronic map to a wireless device upon entering a particular indoor area, e.g., a room, a shopping mall, etc. Typically, such indoor positioning systems have been based on Wi-Fi networks, using either received signal strength indicators (RSSIs) or timing- based techniques. However, these indoor positioning systems are not without accuracy and reliability issues, as they sometimes rely on certain assumptions that do not reflect real-world conditions or operational characteristics.

US 2004/0203872 A1 describes an apparatus, system and method for determining the physical location of a mobile client device operating on a wireless local area network (WLAN).

US 2010/0150117 A1 describes a method and system for position location of clients in wireless local area networks (WLANS), wherein the position location technique utilizes time-of-flight (TOF) measurements of signals transmitted from a client to an number of wireless access points (APs) or vice versa to determine distances.

US 2010/0283679 A1 describes methods and apparatus to locate a wireless device, wherein the method includes receiving a response location message at a first wireless station from a second wireless station that identifies the location of a third wireless station.

WO 2012/077991 A2 describes a method, apparatus and system for transmitting and receiving a channel availability query and response in a wireless communication system.

The scope of the present invention is defined by appended independent claims. Optional features are specified by the sub-claims.

**BRIEF DESCRIPTION OF THE DRAWINGS**

FIG. 1 depicts a functional block diagram of a wireless location identification system including a number of wireless devices coupled to a wired network via a location point, in accordance with various aspects and principles of the present disclosure.

FIG. 2 depicts a flow diagram illustrating a method of identifying location of wireless devices by supplying location-related information, useful to understand the invention but not falling within the literal wording of the claims.

FIG. 3 depicts a flow diagram illustrating another method of identifying location of wireless devices by supplying location-related information, in accordance with various aspects and principles of the present disclosure.

FIG. 4 depicts a sequence flow diagram illustrating a further method of identifying location of wireless devices by supplying location-related information, in accordance with various aspects and principles of the present disclosure.

FIG. 5 depicts a functional block diagram of a wireless location identification system, in accordance with various aspects and principles of the present disclosure.

**DETAILED DESCRIPTION**

In the description that follows, like components have been given the same reference numerals, regardless of whether they are shown in different embodiments. To illustrate an embodiment(s) of the present disclosure in a clear and concise manner, the drawings may not necessarily be to scale and certain features may be shown in somewhat schematic form. Features that are described and/or illustrated with respect to one embodiment may be used in the same way or in a similar way in one or more other embodiments and/or in combination with or instead of the features of the other embodiments.

In accordance with various embodiments of this disclosure, what is proposed is a wireless communication system and methods thereof for information exchange between a location point (LP) and a wireless device. Supplemental location-related information of a LP includes distance data from another LP and may include a geographic location source, geographic location accuracy, geographic location update time, LP type, timing offset calibration accuracy, may be wirelessly transmitted from a LP to a wireless device.

A system is presented that includes at least one wireless device and a location point (LP) configured to wirelessly transmit data to the at least one wireless device. The transmitted data includes location specific information of the LP, which includes distance data from another LP and may include one or more of the following: geographic location source, geographic location accuracy, geographic location update time, LP type, timing offset calibration accuracy.

In another embodiment, a system is presented that includes a wireless device configured to receive data from one or more location points (LPs). The data received by the wireless device at least includes location specific information of each LP of the one or more LPs.

A method is presented that includes sending data from a location point (LP) to a wireless device. The data sent from the LP to the wireless device at least includes location specific information of the LP, which includes distance data from another LP.

These and other features and characteristics, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of claims. As used in the specification and in the claims, the singular form of "a", "an", and "the" include plural referents unless the context clearly dictates otherwise.

By way of review, the inventors have observed that conventional wireless indoor navigation and location identification systems rely on certain assumptions that do not always hold true, thereby compromising reliability and accuracy. For example, some Wi-Fi-based techniques, especially those predicated on crowdsourcing/surveys, assume that network access points (APs) remain at a fix position. However, APs may be mounted on a vehicle (e.g., bus, train, etc.) or in a mobile apparatus, thereby severely impacting the efficacy of the associated location algorithm.

As another example, sometimes additional pseudo-AP devices are deployed to address certain coverage issues. These pseudo-AP devices are configured to act like a network AP for location purposes but intentionally lack full communication capabilities. However, without having any information as to whether a proximate pseudo-AP device is a fully functioning network AP or a pseudo device, wireless devices may attempt to associate and transfer/negotiate communication commands with the pseudo-AP device, thereby wasting power and bandwidth.

In yet another example, for wireless indoor location identification systems employing RSSI techniques, the associated location algorithm assumes that the network AP transmits its radio-frequency (RF) beacon at constant power. As a practical and/or implementation-specific matter, beacons do not always operate at constant energy.

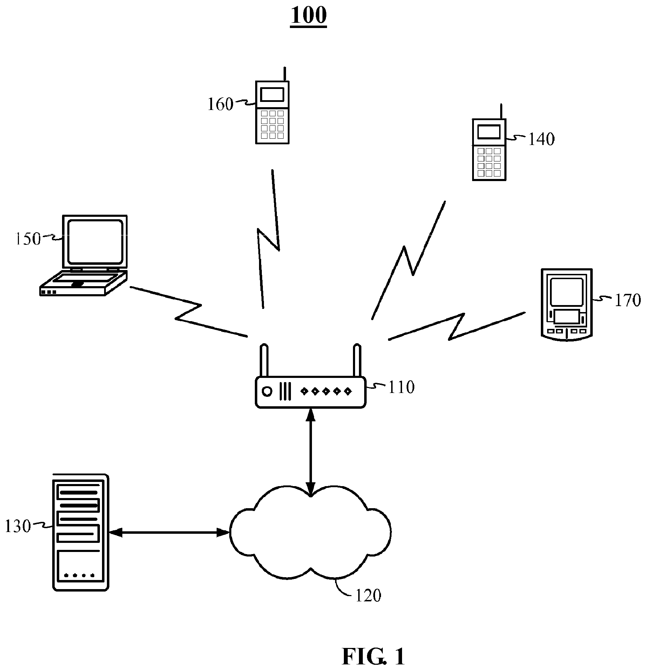

With this said, the disclosed embodiments are directed to a wireless location identification system and method that is capable of exchanging certain supplemental location-related information that addresses many of the deficiencies noted above. In particular, FIG. 1 depicts a non-limiting example of a wireless location identification system 100, in accordance with various aspects and principles of the present disclosure. System 100 includes a network location point (AP) 110 in communication with a number of wireless devices, including wireless telephones 140 and 160, notebook computer 150, and personal digital assistant 170. LP 110 is configured to provide the wireless devices 140, 150, 160, 170 access to network 120. As will be appreciated, network 120 is communicatively coupled, either wirelessly or wired, to server 130 that may comprise one or more computing platforms.

As used herein, the term "wireless device(s)" refers to any device that may communicate with other devices via wireless signals. Such devices may comprise, for example, a laptop, mobile device, cellular/smartphone, gaming device, tablet computer, a wireless-enabled patient monitoring device, personal communication system (PCS) device, personal digital assistant (PDA), personal audio device (PAD), portable navigational device, and/or any other electronic wireless-enabled device configured to receive a wireless signal. It may also include relatively stationary devices such as desktop computers with wireless capabilities. Such wireless devices may communicate via any number of wireless communication protocols, examples of which are noted below.

As used herein, the term "location point" or "LP" refers to a device with location determining capabilities. Such devices include a network access point (AP) and may include a dedicated location entity.

As used herein, the term "access point" or "network access point" refers to any device with the ability to receive wireless signals from one or more devices and provides access to a network, such as a local area network (LAN) or the Internet, for example. It should be appreciated that such devices also include location determining operations. In embodiments, a network AP may be installed at a fixed terrestrial location or may be installed on a vehicle or mobile apparatus. In one aspect, a network AP may include a femtocell utilized to extend cellular telephone service into a business or home. In such an implementation, one or more wireless devices may communicate with the femtocell via a code division multiple access (CDMA) cellular communication protocol, for example, and the femtocell would provide the wireless devices access to a larger cellular telecommunication network by way of another broadband network such as the Internet. Of course, these are example implementations utilizing one or more wireless devices and a network AP, and the scope of claimed subject matter is not limited in this respect.

As used herein, a dedicated location entity may be a degraded AP, as compared with a network AP, with only location determining capabilities and lacking network access and/or connectivity. As used herein, a dedicated location entity or a degraded AP may include a Pseudo AP, and/or a dedicated ToF tag AP.

As used herein, the term "network" refers to a wireless communication network that may be utilized in example implementations as discussed below. The network may be configured to operate under a variety of wireless communication protocols and standards, such as, for example, Wi-Fi, WiMax, WWAN, WLAN, WPAN, Bluetooth, GSM, CDMA, GPRS, 3G or 4G, LTE, Wireless USB, IEEE 802.11x standard, IEEE std. 802.11k-2008 published June 12, 2008, or IEEE std. 802.11-2012 published March 29, 2012, or any other implementation of a suitable wireless standard. It will be appreciated that the wireless communication is not limited to any specific standard and the examples discussed may be implemented separately or in combination with each other.

Referring to FIG. 1, wireless location identification system 100 is configured to facilitate transmit of supplemental location-related information between LP 110 and wireless devices 140, 150, 160, 170, in accordance with various aspects and principles of the present disclosure. This supplemental information enables the accurate location/position determination of wireless devices 140, 150, 160, 170 and may be conveyed during the initial, unassociated communication stages (e.g., acknowledgement, hand-shaking, negotiation phases, etc.) between wireless devices 140, 150, 160, 170 and LP 110 - without having to establish full network connectivity.

That is, wireless standards/protocols define the contents and field formats of certain packet frames that contain basic information regarding the communicating entities, such as, LP 110 and wireless devices 140, 150, 160, 170. For example, IEEE 802.11-2012 and/or IEEE 802.11k-2008 define the packet frame formats for WiFi communications. Such framing formats may be exploited to introduce supplemental location-related information that can be transmitted between the entities in order to optimize the determination of entity location/position.

Consistent with various embodiments, the supplemental location-related information may be configured to include, for example, geographic location source data indicative of which type of source the LP obtains its geographic location; geographic location accuracy data indicative of how accurate the obtained geographic location is; and geographic location update timing data indicative of the last time the geographic location was updated.

Supplemental location-related information includes distance data indicative how far the LP is from other APs. In addition, the supplemental location-related information may include LP type data, such as, for example, data indicating whether the LP is stationary or mobile, whether the LP is a pseudo AP or not, whether the LP is a dedicated time-of-flight (ToF) tag AP or not, and/or whether the LP is a WiFi AP or WiFi non-AP (e.g., a client); timing offset calibration accuracy data, which is set to zero when the LP is not calibrated, or combinations thereof.

In various embodiments, the geographic location source can be manually configured, automatically deduced from other APs within a certain precision, provided by a network server, etc. In certain embodiments, the pseudo-AP may be configured to provide lower radiated RF power, smaller coverage, and deployed for only location determination purposes.

Returning to FIG. 1, the supplemental location-related information may be broadcasted simultaneously to numerous wireless devices 140, 150, 160, 170 by employing the RF beacon of LP 110, in accordance with various aspects and principles of the present disclosure. That is, in certain wireless implementations, such as, for example, a WiFi network, LP 110 alerts wireless devices 140, 150, 160, 170 that are within range as to its existence, by broadcasting an RF beacon signal containing a beacon frame. As such, the RF beacon signal identifies and announces LP 110 along with supplying AP-related information, as contained in the beacon frame. LP 110 (or pseudo-APs) may transmit the beacon signal on the order of milliseconds. Such broadcasting occurs in an unassociated WiFi state in which wireless devices 140, 150, 160, 170 have not established network connectivity through LP 110. Given the capability to transmit AP-related information 110 in an unassociated state, supplemental location-related information may be introduced in the beacon frame.

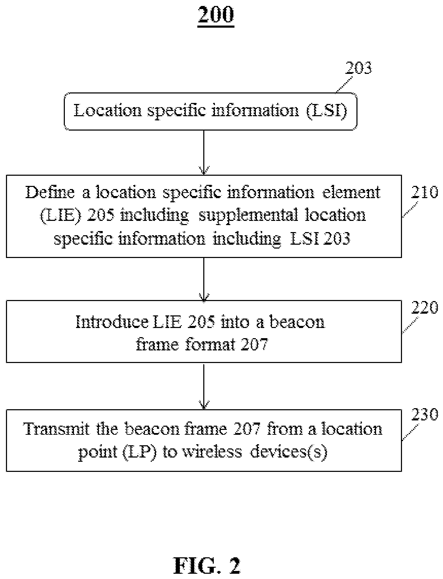

To this end, FIG. 2 depicts flow diagram of process 200 that supplies supplemental location-related information via broadcasting beacon frames, in accordance with various aspects and principles of the present disclosure. It is, once again noted, that although the disclosed embodiments are herein described relative to WiFi implementation and compatible with one or more IEEE 802.11x standards for the sake of clarity and tractability, the scope of claimed subject matter is not limited in this regard.

In process 200, location specific information 203 of LP 110 may be defined in location specific information element (LIE) 205.

As noted above, standard information, such as, for example, geographic location of LP 110, may be included in LIE 205. However, LIE 205 may be defined to include supplemental location-related information, such as location specific information 203. In various embodiments, LIE 205 may use one of the reserved WiFi format frame element IDs (e.g., IDs 128-129, 133-136, 143-173, 175-220, and 222-255) as shown in Table 8-54 at IEEE 802.11-2012 or the reserved element IDs as listed in Table 7-26 at IEEE 802.11k-2008. For example, the location specific IE 205 may be defined as element 175 in Table 8-54 at IEEE 802.11-2012.

By way of illustration, LIE 205 may be configured to include supplemental location-related data as shown in following Table 1.

As depicted in Table 1, LIE 205 may include location specific information 203 indicative of AP-type information, such as, whether LP 110 is stationary or mobile, or whether it is a pseudo AP or not; geographic location source, geographic location accuracy, geographic location update time, distance from another AP; and/or timing offset calibration accuracy. The location specific information 203 may occupy a number of octets as may be suitable for implementation purposes. For complete description of LIE 205, Table 1 also includes standard information such as geographic location information having octet framing similar to the measurement report field format for the location configuration information report, as provided by IEEE 802.11k-2008, section 7.3.2.22.9 or IEEE 802.11-2012, section 8.4.2.24.10.

**Table 1**

| Octet | Bit | Information |
|---|---|---|
| 1 | 0 | Mobile/Not Mobile 1/0 |
| 1 | 1 | Dedicated location entity (e.g., Pseudo AP) - 1 otherwise 0 |
| Similar to Measurement Report field format for Location Configuration Information Report See section 7.3.2.22.9 at IEEE 802.11k-2008 or section 8.4.2.24.10 at IEEE 802.11-2012 | | Geographic location |
| | | Geographic location source |
| | | Geographic location accuracy |
| | | Geographic location update time |
| | | Distance from another AP |
| | | Timing offset calibration accuracy |

Referring back to process 200, at block 220, LIE 205 defined at block 210 may be introduced into a beacon frame format 207. Generally, beacon frame includes a MAC header, a beacon frame body, and a frame check sequence (FCS), as known to one of ordinary skill in the art. For example, the beacon frame body of Table 8-20 at IEEE 802.11-2012 includes mesh channel switch parameter information and vendor specific information. In the example shown in Table 2, beacon frame body 207 includes information of LIE 205.

At block 230 of process 200, the beacon frame is broadcasted from LP 210 to wireless devices 140, 150, 160, 170. The beacon frame body includes LIE 205 which contains supplemental location specific information 203 indicative of AP-type information, such as, whether LP 110 is stationary or mobile, or whether it is a pseudo AP or not; geographic location source, geographic location accuracy, geographic location update time, distance from another AP; and/or timing offset calibration accuracy. In this manner, supplemental location-related information may be broadcasted to numerous wireless devices 140, 150, 160, 170 by virtue of broadcast RF beacon of LP 110 without requiring an association or connection to a network.

**Table 2**

| information | Notes |
|---|---|
| | |
| Mesh Channel Switch Parameters | |
| Location Specific information Element 205 | The Beacon Location information element is optionally present if det11MgmitOptionLocationActivated is true |
| Vendor Specific | One or more vendor-specific elements are optionally present. These elements follow all other elements. |

In certain embodiments, the supplemental location-related information may be provided to wireless devices 140, 150, 160, 170 by employing the Location Configuration Information (LCI) Report as defined by IEEE 802. 11x standard. In particular, wireless devices 140, 150, 160, 170 in the vicinity of the LP 110 may initiate an inquiry to LP 110 requesting its current position. In response, LP 110 transmits an LCI Report, which typically includes standard current position information, such as, for example, latitude data, longitude data, altitude data, and optionally azimuthal data.

Given this preliminary reporting scheme, supplemental location-related information may be adapted and introduced into the LCI report format to transmit or convey the supplemental location-related information to inquiring devices 140, 150, 160, 170 in an unassociated state manner.

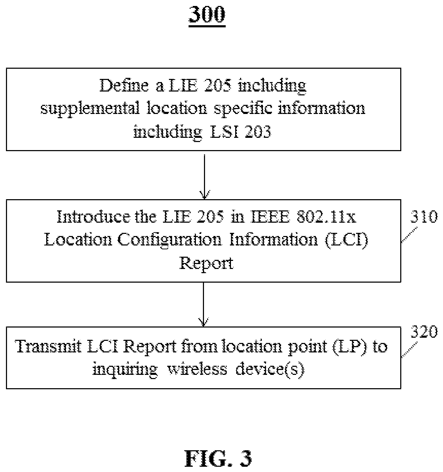

FIG. 3 depicts flow diagram of process 300 that supplies supplemental location-related information via the LCI report, useful to understand the invention but not falling within the literal wording of the claims. At block 310 of process 300, location specific information element (LIE) 205including at least the location specific information 203 as defined above can be introduced into the LCI Report in a manner consistent with IEEE 802.11k-2008 or IEEE 802.11-2012 standards.

At block 320 of process 300, the LCI report including location specific information element (LIE) 205 may be transmitted to inquiring wireless device(s) 140, 150, 160, 170, in accordance with IEEE 802.11k-2008 or IEEE 802.11-2012 standards.

In certain embodiments, the supplemental location-related information may be provided to wireless devices 140, 150, 160, 170 by exploiting the time-of-flight (ToF) measurement protocol. That is, the supplemental location-related information may be provided in response to ToF measurement requests.

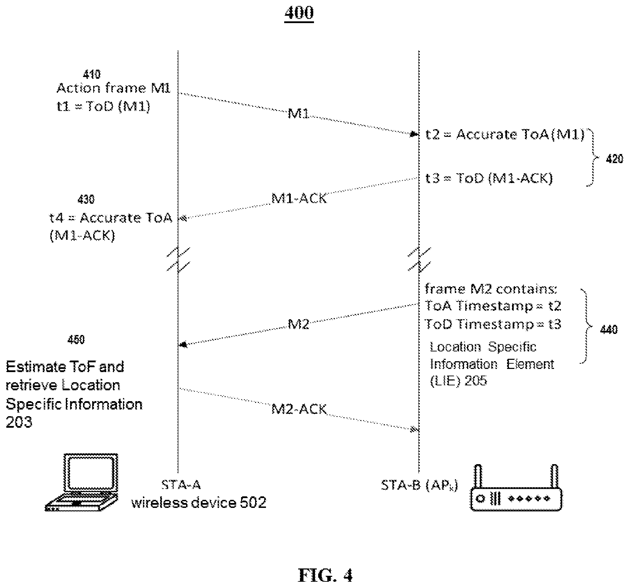

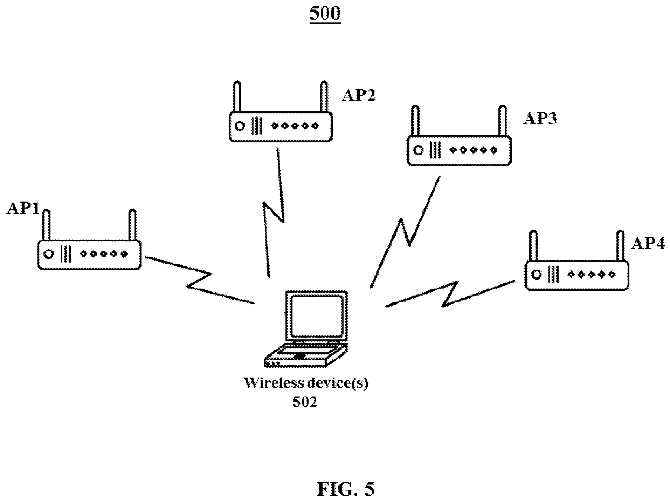

As such, FIG. 4 depicts sequence flow diagram 400 illustrating a ToF technique for supplying supplemental location-related information and FIG. 5 depicts a functional block diagram of a corresponding wireless location system 500 configured to perform ToF measurements, in accordance with various aspects and principles of the present disclosure.

As shown in FIG. 5, system 500 comprises multiple network APs, e.g., AP1, AP2, AP3, AP4, etc., and wireless device 502 at an unknown position. APs 1-4 may be devices that allow for wireless devices to communicate with each other by acting as both a transmitter and receiver of WLAN radio signals. APs 1-4 may take the form of LP 110 discussed above, including dedicated hardware devices that include a built-in network adapter, antenna, radio transmitter, etc. while wireless device 502 may take the form of any one of wireless devices 140, 150, 160, 170. In one embodiment, system 500 incorporates at least three APs (although FIG. 5 depicts AP1 through AP4 for illustration purpose), that receive wireless signals from an unknown location.

Referring to FIG. 4, at interval 410, wireless device 502 may initially transmit an action frame M1 (e.g., request message) to LP and record timestamp T1 indicating the time instant that the message is transmitted (e.g., time of departure (ToD) of M1).

At interval 420, the LP may receive action frame M1, record the time instant it receives message M1 as T2 (i.e., time of arrival (ToA) of M1) and, at a later time, transmits an acknowledgement message M1-ACK back to wireless device 502 and records M1-ACK's ToD as T3.

At interval 430, wireless device 502 may receive the acknowledgement message M1-ACK and record the time instant it receives the message M1-ACK as T4 (i.e., ToA of M1-ACK).

At interval 440, the LP may send frame M2, in response to the action frame M1, to wireless device 502. The frame M2 may contain the time T2, which is the time instant the LP received message M1, i.e., ToA of M1, the time T3 that represents the time instant the LP sends the acknowledgement message M1-ACK, i.e., ToD of M1-ACK, and may accommodate other information. That is, information can be piggybacked onto or otherwise coupled to the ToF response frame (or message) M2. The piggybacked information can then be transmitd between the LP and wireless device 502. In certain embodiments, supplemental location-related information may be introduced via response frame M2. For example, location specific information element (LIE) 205 may be piggybacked onto response frame M2.

With this in mind, at interval 450, wireless device 502 may receive response frame M2, which may at least include location specific information element (LIE) 205. Wireless device 502 may then possesses T1 and T4 information, which have been recorded at intervals 410 and 430, respectively, T2, T3 information, as well as piggybacked location specific information element (LIE) 205, which has been retrieved from response frame M2 at interval 440.

The time-of-flight (ToF) between wireless device 502 and the LP can then be calculated using the following equation:

$$ToF = [(T4-T1)-(T3-T2)]/2$$

The distance between wireless device 502 and the LP can then be calculated according to $r_k = ToF*C$, wherein C is the speed of light, wherein k = 1, 2, ... k, and K is greater than 3 for trilateration (e.g., k=4 in the example of FIG. 5).

Meanwhile, wireless device 502 may retrieve the piggybacked location specific information element (LIE) 205 from response frame M2, which is a response to the action frame M1. In addition, at a later time, wireless device 502 may send acknowledge frame M2-ACK to LP according to the ToF measurement protocol. In so doing, supplemental location-related information may be supplied by piggybacking location specific information element (LIE) 205 on the ToF protocol in an unassociated state manner.

Having thus described the basic concepts, it will be rather apparent to those skilled in the art after reading this

EP 2 896 255 B1

detailed disclosure that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested by this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure. In addition, the term "logic" is representative of hardware, firmware, software (or any combination thereof) to perform one or more functions. For instance, examples of "hardware" include, but are not limited to, an integrated circuit, a finite state machine, or even combinatorial logic. The integrated circuit may take the form of a processor such as a microprocessor, an application specific integrated circuit, a digital signal processor, a micro-controller, or the like.

### Claims

1. A wireless apparatus comprising:

   means for requesting location measurement from an Access Point, AP (110); and
   means for retrieving location related information from a time of flight, ToF, message received from said AP (110) according to a ToF measurement protocol;
   **characterised in that**
   the ToF message comprises supplemental location-related information including distance data indicative of how far the AP (110) is from an other Access Point, AP.

2. The apparatus of claim 1, wherein the ToF message comprises an indication of a geographic location accuracy corresponding to the location of the AP (110).

3. The apparatus of any one of claims 1-2 comprising means for sending a request for performing ToF measurements, and performing the ToF measurement protocol based on the request.

4. The apparatus of any one of claims 1-3, wherein the ToF measurement protocol is in accordance with an IEEE 802.11 standard family.

5. The apparatus of any one of claims 1-4, wherein the apparatus is a mobile device configured to request location measurements from an access point, AP (110), the mobile device comprising an antenna.

6. A method of performing location measurements in a wireless system, the method comprising:

   transmitting from a wireless device to one or more Access Points, APs, a request to receive location measurement data;
   receiving a plurality of time of flight, ToF, messages of a ToF measurement protocol from at least one AP (110) of the one or more, APs, wherein at least one message of the plurality of ToF messages includes location related information, the location related information configured according to the ToF measurement protocol; and
   retrieving the location related information from the at least one message of the plurality of ToF messages;
   **characterised in that**
   the at least one message of the plurality of ToF messages comprises supplemental location-related information including distance data indicative of how far the AP (110) is from an other Access Point, AP.

7. The method of claim 6, wherein the at least one message of the plurality of ToF messages comprises an indication of a geographic location accuracy corresponding to the location of the AP (110).

7

**Patentansprüche**

1. Drahtlosvorrichtung, die Folgendes umfasst:

   Mittel zum Anfordern einer Standortmessung von einem Zugangspunkt (AP) (110); und
   Mittel zum Abrufen von standortbezogenen Informationen aus einer Flugzeit-(ToF)-Nachricht, die von dem AP (110) empfangen wird, gemäß einem ToF-Messprotokoll;
   **dadurch gekennzeichnet, dass** die ToF-Nachricht ergänzende standortbezogene Informationen umfasst, die Entfernungsdaten beinhalten, die angeben, wie weit der AP (110) von einem anderen Zugangspunkt (AP) entfernt ist.

2. Vorrichtung nach Anspruch 1, wobei die ToF-Nachricht eine Angabe einer geografischen Standortgenauigkeit umfasst, die dem Standort des AP (110) entspricht.

3. Vorrichtung nach einem der Ansprüche 1-2, die Mittel zum Senden einer Anforderung zum Durchführen von ToF-Messungen und zum Durchführen des ToF-Messprotokolls basierend auf der Anforderung umfasst.

4. Vorrichtung nach einem der Ansprüche 1-3, wobei das ToF-Messprotokoll mit einer IEEE 802.11-Standardfamilie übereinstimmt.

5. Vorrichtung nach einem der Ansprüche 1-4, wobei die Vorrichtung eine mobile Vorrichtung ist, die dazu ausgelegt ist, Standortmessungen von einem Zugangspunkt (AP) (110) anzufordern, wobei die mobile Vorrichtung eine Antenne umfasst.

6. Verfahren zum Durchführen von Standortmessungen in einem drahtlosen System, wobei das Verfahren Folgendes umfasst:

   Übertragen, von einer Drahtlosvorrichtung an einen oder mehrere Zugangspunkte (APs), einer Anforderung zum Empfangen von Standortmessdaten;
   Empfangen mehrerer Flugzeit-(ToF)-Nachrichten eines ToF-Messprotokolls von mindestens einem AP (110) des einen oder der mehreren APs, wobei mindestens eine Nachricht der mehreren ToF-Nachrichten standortbezogene Informationen beinhaltet, wobei die standortbezogenen Informationen gemäß dem ToF-Messprotokoll konfiguriert sind; und
   Abrufen der standortbezogenen Informationen aus der mindestens einen Nachricht der mehreren ToF-Nachrichten;
   **dadurch gekennzeichnet, dass** die mindestens eine Nachricht der Vielzahl von ToF-Nachrichten ergänzende standortbezogene Informationen umfasst, einschließlich Entfernungsdaten, die angeben, wie weit der AP (110) von einem anderen Zugangspunkt (AP) entfernt ist.

7. Verfahren nach Anspruch 6, wobei die mindestens eine Nachricht der mehreren ToF-Nachrichten eine Angabe einer geografischen Standortgenauigkeit umfasst, die dem Standort des AP entspricht (110).

**Revendications**

1. Appareil sans fil comprenant :

   un moyen pour demander une mesure de localisation à un point d'accès, AP (110) ; et
   un moyen pour récupérer des informations relatives à la localisation à partir d'un message de temps de vol, ToF, reçu dudit AP (110) selon un protocole de mesure ToF ;
   **caractérisé en ce que** le message ToF comprend des informations supplémentaires relatives à la localisation, comprenant des données de distance indiquant la distance entre l'AP (110) et un autre point d'accès, AP.

2. Appareil selon la revendication 1, le message ToF comprenant une indication d'une précision de localisation géographique correspondant à la localisation de l'AP (110).

3. Appareil selon l'une quelconque des revendications 1 et 2, comprenant un moyen pour envoyer une demande afin de réaliser des mesures ToF, et réaliser le protocole de mesure ToF sur la base de la demande.

4. Appareil selon l'une quelconque des revendications 1 à 3, le protocole de mesure ToF étant conforme à une famille de normes IEEE 802.11.

5. Appareil selon l'une quelconque des revendications 1 à 4, l'appareil étant un dispositif mobile configuré pour demander des mesures de localisation à un point d'accès, AP (110), le dispositif mobile comprenant une antenne.

6. Procédé pour réaliser des mesures de localisation dans un système sans fil, le procédé comprenant :

la transmission, à partir d'un dispositif sans fil, à un ou plusieurs points d'accès, AP, d'une demande pour recevoir des données de mesure de localisation ;
la réception d'une pluralité de messages de temps de vol, ToF, d'un protocole de mesure ToF provenant d'au moins un AP (110) parmi le ou les AP, au moins un message de la pluralité de messages ToF comprenant des informations relatives à la localisation, les informations relatives à la localisation étant configurées selon le protocole de mesure ToF ; et
la récupération des informations relatives à la localisation à partir de l'au moins un message de la pluralité de messages ToF ;
**caractérisé en ce que** l'au moins un message de la pluralité de messages ToF comprend des informations supplémentaires relatives à la localisation comprenant des données de distance indiquant la distance entre l'AP (110) et un autre point d'accès, AP.

7. Procédé selon la revendication 6, l'au moins un message de la pluralité de messages ToF comprenant une indication d'une précision de localisation géographique correspondant à la localisation de l'AP (110).

**100**

FIG. 1

**200**

203

Location specific information (LSI)

Define a location specific information element
(LIE) 205 including supplemental location
specific information including LSI 203

210

Introduce LIE 205 into a beacon
frame format 207

220

Transmit the beacon frame 207 from a location
point (LP) to wireless devices(s)

230

**FIG. 2**

**300**

```
┌─────────────────────────────────────┐
│        Define a LIE 205 including    │
│   supplemental location specific     │
│      information                     │
│        including LSI 203             │
└─────────────────────────────────────┘
                  │
                  ▼
┌─────────────────────────────────────┐   310
│   Introduce the LIE 205 in IEEE      │
│   802.11x Location Configuration     │
│   Information (LCI)                  │
│              Report                  │
└─────────────────────────────────────┘
                  │
                  ▼
┌─────────────────────────────────────┐   320
│ Transmit LCI Report from location    │
│ point (LP) to                        │
│ inquiring wireless device(s)         │
└─────────────────────────────────────┘
```

**FIG. 3**

**400**

410
Action frame M1
t1 = ToD (M1)

M1

t2 = Accurate ToA (M1)

t3 = ToD (M1-ACK)

} 420

430
t4 = Accurate ToA
(M1-ACK)

M1-ACK

frame M2 contains:
ToA Timestamp = t2
ToD Timestamp = t3
Location Specific
Information Element
(LIE) 205

} 440

460
Estimate ToF and
retrieve Location
Specific Information
203

M2

M2-ACK

STA-A
wireless device 502

STA-B (AP$_k$)

**FIG. 4**

500

AP2

AP3

AP1

AP4

Wireless device(s)
502

FIG. 5

**EP 2 896 255 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040203872 A1
- US 20100150117 A1
- US 20100283679 A1
- WO 2012077991 A2